# EUROPEAN PATENT SPECIFICATION

(11) **EP 3 663 200 B1**
(45) Date of publication and mention of the grant of the patent: **23.02.2022**
(21) Application number: 17920386.4
(22) Date of filing: 01.08.2017
(51) Int. Cl.: B64C 39/08, B64C 39/02

(54) **UNMANNED AERIAL VEHICLE FRAME AND UNMANNED AERIAL VEHICLE**
FAHRZEUGAUFBAU FÜR UNBEMANNTES LUFTFAHRZEUG UND UNBEMANNTES LUFTFAHRZEUG
CHÂSSIS DE VÉHICULE AÉRIEN SANS PILOTE ET VÉHICULE AÉRIEN SANS PILOTE

(43) Date of publication of application: 10.06.2020
(73) Proprietor: Guangzhou Xaircraft Technology Co., Ltd., Tianhe District Guangzhou Guangdong 510000 (CN)
(72) Inventor: XIAO, Dingfeng, Guangzhou Guangdong 510000 (CN); HE, Jianbing, Guangzhou Guangdong 510000 (CN); XU, Zhiqin, Guangzhou Guangdong 510000 (CN); WEN, Haijun, Guangzhou Guangdong 510000 (CN)
(74) Representative: Papa, Elisabetta
(86) International application number: PCT/CN2017/095519
(87) International publication number: WO 2019/023950

(56) References cited:
- CN-A- 104 584 330
- CN-A- 105 035 312
- CN-A- 105 035 312
- CN-U- 205 602 086
- CN-U- 206 060 102
- CN-U- 206 060 102
- CN-U- 206 087 262
- CN-U- 206 202 661
- FR-A1- 3 043 917
- US-A1- 2016 137 293
- US-B2- 8 322 648

## Description

### FIELD

The technical scheme relates to a field of aircrafts, and more particularly, to an unmanned aerial vehicle frame and an unmanned aerial vehicle.

### BACKGROUND

Unmanned aerial vehicle (UAV) is a type of aircraft without a human onboard that is controlled by a wireless remote control apparatus cooperating with its own control induction device. With the development of UAV technology, UAV has been widely used in fields of agricultural plant protection, aerial photography, power inspection, environmental monitoring, forest fire prevention and disaster inspection due to its advantages of flexibility, unpiloted flight and low operation requirements, which effectively overcomes drawbacks of manned aircraft in air operations.

Since the UAV carries out flight work in an outdoor environment, in case of rain or fog, water droplets collect on a body of the UAV, especially the UAV applied in agricultural plant protection. Since automized spray during spraying causes collection of water droplets on the UAV with regard to the spraying operation during agricultural plant protection, the control induction device and other precision electronic components mounted on the body of the UAV need to be prevented from in contact with the water droplets to avoid damage. However, in the related art, the unreasonable design of a body structure of the UAV causes unreasonable layouts of lines, pipelines and water paths loaded and connected to the body, which makes it difficult to provide waterproof function and protection at an interface of each line, a joint of each pipeline, and a joint of each water paths.

FR3043917A1 provides a drone, which includes a central body and a plurality of arms, preferably at least three arms, each arm includes a first end mounted on the central body, each arm includes, in the vicinity of a second end, at least one electric motor and at least one propeller coupled to said electric motor, each arm accommodating at least one electric battery.

### SUMMARY

### Technical Issue

The technical scheme aims to provide an unmanned aerial vehicle (UAV) frame and a UAV to solve the technical problem existing in the related art that the unreasonable design of the body structure of UAV results in difficulty in waterproof function and protection for the UAV.

### Technical Scheme

The object of the present invention is then to solve the problems of known art, through an unmanned aerial vehicle (UAV) frame as defined in independent claim. Additional features of the present invention are defined in the corresponding depending claims.

Additional object of the present invention is an unmanned aerial vehicle including the unmanned aerial vehicle (UAV) frame of the present invention.

In order to achieve the above objective, a first aspect of the present discourse provides a UAV frame as defined in claim 1.

According to the other aspect of the present disclosure, a UAV is provided. The UAV includes a first element, a second element, and a frame. The frame is the above-mentioned UAV frame, and the first element and the second element are mounted on the body bearing plate of the frame for the UAV.

### Beneficial Effect

The UAV is assembled by using the UAV frame such that the connection cavity of the transfer chamber body is defined in the UAV frame after assembly. In such a way, the connection interfaces of the connection lines of the UAV's line arrangement are received in the connection cavity of the transfer chamber body, such that the connection interfaces of the connection lines are designed in a way of invisible arrangement to exclude the affection caused by disordered connection interfaces of the connection lines after assembly, and the overall appearance is much tidy and aesthetic. Moreover, the protection for the connection interfaces of the connection lines by the transfer chamber body eliminates problems such as poor contact, damage to the connection interfaces of the connection lines caused by external environmental factors.

### BRIEF DESCRIPTION OF THE DRAWINGS

Fig. 1 is a schematic view of a first assembly structure of a UAV frame in an embodiment of the technical scheme;
Fig. 2 is a schematic view of a second assembly structure of a UAV frame in an embodiment of the technical scheme;
Fig. 3 is a schematic view of a first bearing plate of a UAV frame in an embodiment of the technical scheme;
Fig. 4 is a schematic view of a second bearing plate of a UAV frame in an embodiment of the technical scheme;
Fig. 5 is a schematic view of a transfer chamber body of a UAV frame in an embodiment of the technical scheme at a first perspective;
Fig. 6 is a schematic view of a transfer chamber body of a UAV frame in an embodiment of the technical scheme at a second perspective;
Fig. 7 is a schematic view of a transfer chamber cover of a UAV frame in an embodiment of the technical scheme;
Fig. 8 is a schematic view of assembly of an arm, a connection sleeve ring and a sealing sleeve ring of a UAV frame in an embodiment of the technical scheme;
Fig. 9 is an exploded view of a fixed connection base and a fixed connection press ring of a UAV frame in an embodiment of the technical scheme;
Fig. 10 is a schematic view of a mounting frame of a UAV frame in an embodiment of the technical scheme;
Fig. 11 is a schematic view of a sealing hose of a UAV frame in an embodiment of the technical scheme;
Fig. 12 is a schematic view of a sealing sleeve ring of a UAV frame in an embodiment of the technical scheme;
Fig. 13 is the schematic view of the sealing press ring of a UAV frame in an embodiment of the technical scheme;
Fig. 14 is the schematic view of the front leg of a UAV frame in an embodiment of the technical scheme;
Fig. 15 shows a structure of a rear leg of a UAV frame in an embodiment of the technical scheme;
Fig. 16 is an exploded view of a foot support of a UAV frame in an embodiment of the technical scheme;
Fig. 17 is a schematic view of an assembled foot support of a UAV frame in an embodiment of the technical scheme;
Fig. 18 is a schematic view of a foot support of a UAV frame in a mounting state in an embodiment of the technical scheme;
Fig. 19 is an exploded view of a fastener assembly in a foot support of a UAV frame in an embodiment of the technical scheme;
Fig. 20 is a schematic view of a UAV in an embodiment of the technical scheme at a first perspective;

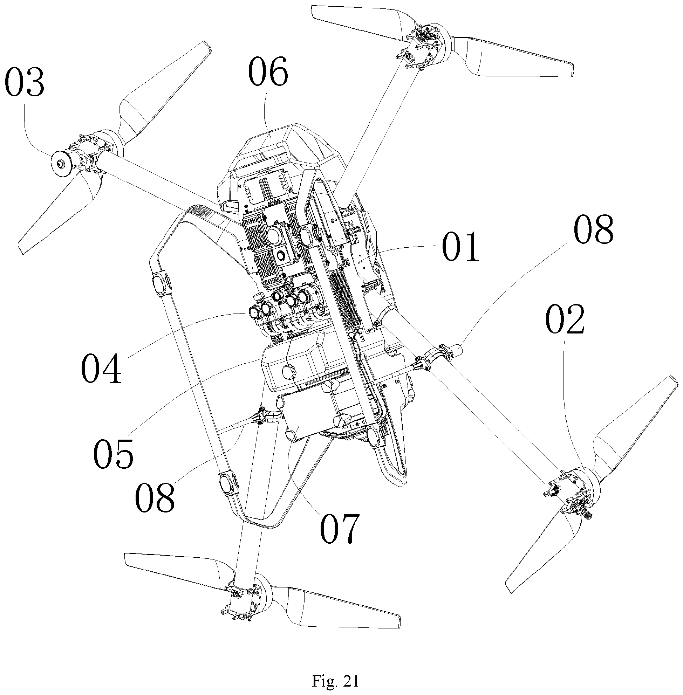

Fig. 21 is a schematic view of a UAV in an embodiment of the technical scheme at a second perspective;

### DETAILED DESCRIPTION

In order to clarify the technical problem to be solved, technical scheme and advantages of the present disclosure, the following is a further detailed description of the present disclosure with reference to drawings and embodiments. It should be understood that the specific embodiments described herein are only used for explaining the present disclosure but should not be construed to limit the present disclosure.

In embodiments of the present disclosure, a receiving device acquires identification information of a wearable device through radio frequency identification (RFID) of the wearable device and sends the identification information of the wearable device to a forwarding node. The wearable device convers vital signs data into chirp data and sends it to the forwarding node.

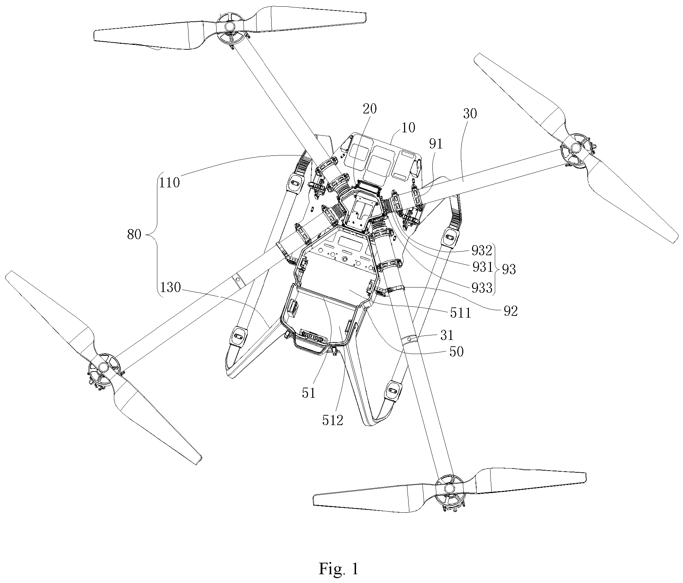

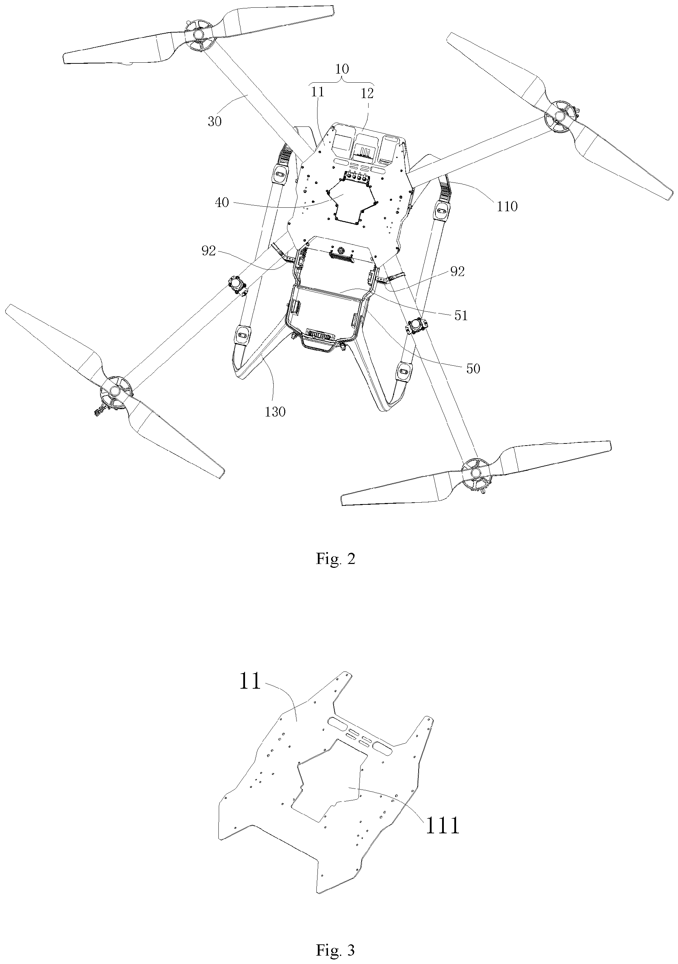

As illustrated in Fig. 1 to Fig. 8, a UAV frame of the present embodiment includes a body bearing plate 10, a transfer chamber body 20 and a transfer chamber cover 40. The body bearing plate 10 is used for mounting a first element and a second element. The transfer chamber body 20 has a connection cavity 211 with an open end. The transfer chamber body 20 has a through hole in communication with the connection cavity 211. The transfer chamber body 20 is sealedly connected to the body bearing plate 10, and the transfer chamber cover 40 sealedly covers the open end of the transfer chamber body 20. The first element and the second element are located outside the transfer chamber body 20, the through hole is used for passing through a connection line of the first element and a connection line of the second element, and the connection cavity 211 is used for receiving connection interfaces of the connection line of the second element and the connection line of the first element.

The UAV is assembled by using the UAV frame such that the connection cavity 211 of the transfer chamber body 20 is defined in the UAV frame after assembly. In such a way, the connection interfaces of the connection lines of the UAV's line arrangement (which may be a physical line arrangement such as pipeline arrangement or an electric wiring arrangement which is illustrated as an example in the present disclosure) are all received in the connection cavity 211 of the transfer chamber body 20, such that the connection interfaces of the connection lines are designed in a way of invisible arrangement to exclude the affection caused by disordered connection interfaces of the connection lines after assembly, and the overall appearance is much tidy and aesthetic. Moreover, the protection for the connection interfaces of the connection lines by the transfer chamber body 20 eliminates problems such as poor contact, damage to the connection interfaces of the connection lines caused by external environmental factors. Additionally, the first element and the second element are located outside the transfer chamber body 20 to reduce the volume of the transfer chamber body 20.

The UAV frame in the present embodiment includes a plurality of arms 30, and each of the arms 30 has a first end and a second end opposite each other, as well as a lumen through the first end and the second end. A connection end of the first end of each arm 30 is fixedly connected to the body bearing plate 10. The transfer chamber body 20 includes a first side wall surrounding the connection cavity, and the through hole of the transfer chamber body 20 includes a mounting through hole 212 defined on the first side wall 201. The first end of the arm 30 is sealedly connected to the first side wall 201. The plurality of arms 30 correspond to a plurality of mounting through holes 212 one to one. That is, the mounting through hole 212 in communication with the lumen of the arm 30 and the connection cavity 211, and the second end of the arm 30 is used for mounting the second element, the lumen and the mounting through hole 212 are used for passing through the connection line of the second element, and the connection line interface of the second element is located in the connection cavity 211. By providing the connection cavity 211 and combining with the lumen of the arm 30, not only the connection interfaces of the connection lines of the first element and the second element mounted to the body bearing plate 10 are received in the connection cavity, but also the connection line of the second element mounted to the end of the arm 30 extends and passes through the lumen, and the connection interface of the second element is received in the connection cavity, so as to further achieve the invisible storage effect of the line arrangement after assembling the UAV, thus causing a tidy and aesthetic overall appearance of the UAV frame.

In the present embodiment, a sealing protrusion 214 is circumferentially arranged at an end of the open end of the transfer chamber body 20, a sealing groove 41 is circumferentially arranged at the transfer chamber cover 40, and the sealing protrusion 214 is sealedly fitted in the sealing groove 41. During assembly, the sealing groove 41 on the transfer chamber cover 40 is aligned with the sealing protrusion 214, such that the sealing protrusion 214 is inserted and extended into the sealing groove 41, and the transfer chamber cover 40 is fixedly connected to the body bearing plate 10 by means of a screw to seal the open end of the connection cavity 211. That is, the transfer chamber cover 40 is detachably connected to the transfer chamber body 20.

As illustrated in Fig. 1 to 4, the body bearing plate 10 includes a first bearing plate 11 and a second bearing plate 12 arranged opposite each other, and the transfer chamber body 20 is located between the first bearing plate 11 and the second bearing plate 12. The first bearing plate 11 and the second bearing plate 12 together form a support for the transfer chamber body 20 and the plurality of arms 30 to increase the mechanical strength of the UAV frame. Moreover, the transfer chamber body 20 and the arms 30 are connected between the first bearing plate 11 and the second bearing plate 12, which not only defines a sealed connection cavity 211 of the transfer chamber body 20, but also forms a large exposed mounting space. By effective exploitation of the exposed mounting space formed between the first bearing plate 11 and the second bearing plate 12, rest corresponding parts needed during the assembly of the UAV can be mounted in the exposed mounting space, so as to improve the space utilization rate of the UAV frame (in fact, waterproof and protective requirements of the assembly parts in the exposed mounting space are not high, and it is much easy to protect these assembly parts and prevent them from coming in contact with water.) Additionally, the first bearing plate 11 is provided with a first matching hole 111, and the second bearing plate 12 is provided with a second matching hole 121. The open end of the connection cavity 211 is opposite the first matching hole 111, and the transfer chamber body 20 covers the second matching hole 121. The transfer chamber body 20 also includes a bottom wall 22 from which the first side wall 201 extends vertically, and the through hole of the transfer chamber body 20 also includes a first via hole 221 and a second via hole 222 defined on the bottom wall 22. The second matching hole 121 in communication with the connection cavity 211 through the first via hole 221 and the second via hole 222, and the open end of the connection cavity 211 is opposite the first matching hole 111. In the present embodiment, the first element includes an electronic speed controller (ESC) located outside the transfer chamber body 20, and the first via hole 221 is used for passing through a connection line of the ESC. The second element includes an electric motor mounted to the second end of the arm 30, and a connection line of the electric motor passes through the corresponding mounting through hole 212 and the lumen of the arm 30, in such a way that a connection interface of the connection line of the ESC and a connection interface of the connection line of the electric motor are both located in the connection cavity 211 of the transfer chamber body 20.

The transfer chamber body 20 in the present embodiment also includes a second side wall 202 connected to the first side wall 201. The transfer chamber body 20 may include four first side walls 201, or six first side walls 201, or eight first side walls 201 and the like. Accordingly, the number of arms 30 is four, or six, or eight. Preferably, the transfer chamber body 20 in the present embodiment includes four first side walls 201 and four arms 30, and the four first side walls 201 are evenly arranged at both sides of the second side wall 202. The through hole of the transfer chamber body 20 also includes a communicating hole on the second side wall 202, and that is a outlet box 60 arranged on the second side wall 202, and the space of the outlet box 60 is in communication with the connection cavity 211. When the UAV frame is applied to assembly of the entire UAV after the UAV frame is assembled, a worker passes a connection line of a fight controller through the outlet box 60, and electrically couples the flight controller with the ESC. A connection interface between the connection line of the flight controller and the connection line of the ESC are located in the connection cavity 211 of the transfer chamber body 20 and arranged in the outlet box 60 using a waterproof washer, so as to reliably and well seal the connection line passing through the communicating hole.

The first element in the present disclosure includes a liquid storage container arranged outside the transfer chamber body 20. The transfer chamber body 20 also includes a third side wall 203, and the third side wall 203 is connected to the first side wall 20 and opposite the second side wall 202. The four first side walls 201 are also evenly arranged on both sides of the third side wall 203. The through hole of the transfer chamber body 20 also includes an insertion through hole 2031 arranged on the third side wall 203, and the insertion through hole 2031 is used for passing through a connection line of the liquid storage container. Moreover, the second element of the present embodiment also includes a nozzle (i.e. a spray device 03) mounted to the second end of the arm 30, and the connection line of the spray device 03 passes through the lumen of the arm 30 and the mounting through hole 212, such that a connection interface of the connection line of the liquid storage container and a connection interface of a connection line of the spray device 03 are both located in the connection cavity 211 of the transfer chamber body 20.

Referring to Fig. 1, Fig. 2 and Fig. 10, the UAV frame also includes a mounting frame 50 which may be used to mount and connect a power supply battery module 07. For a plant protection UAV applied in the plant protection operation, which is the plant protection UAV in the technical scheme, the mounting frame 50 is not only used to mount and connect the power supply battery module 07, but also used to mount and connect the liquid storage container 05 for storing liquid medicine during the plant protection spraying. In the present embodiment, a first side of the mounting frame is fixedly connected to the second bearing plate 12, the mounting frame 50 is located between two arms 30, and the mounting frame 50 is fixedly connected to the two adjacent arms 30 through traction connection assemblies 92. Meanwhile, the first side of the mounting frame 50 is fixedly connected to the third side wall 203 of the transfer chamber body 20, and a second side of the mounting frame 50 extends horizontally.

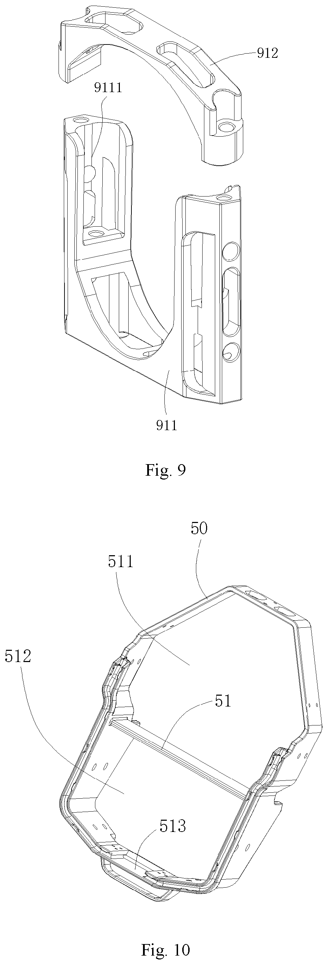

Specifically, as illustrated in Fig. 10, the mounting frame 50 in the present embodiment defines an assembling space 51, which is partitioned into a first assembling space 511 and a second assembling space 512 by a partition crossbar 52, and the second assembling space 512 is away from the body bearing plate 10. The second assembling space 512 in the mounting frame 50 is used to mount and connect the power supply battery module 07, and the side wall of the second assembling space 512 away from the body bearing plate 10 defines a mounting space 513 for a power interface. The power interface (not illustrated) is placed in the mounting space 513 and electrically coupled with the flight controller through a connection wire, and the connection wire between the power interface and the flight controller is arranged along an edge of the mounting frame, preferably, a receiving groove is arranged on the edge and receives the connection wire therein. In the present embodiment, the first assembling space 511 is used for mounting the liquid storage container 05. In addition, for a UAV applied to aerial photography, an apparatus such as an aerial camera can be mounted and connected in the first assembling space 511, or for the UAV applied to plant protection operation, the first assembling space 511 is used to mount and connect the liquid storage container 05. In the present embodiment, a projection of the center of the circle where the ends of the plurality of arms 30 are away from the body bearing plate 10 is within the area of the first assembling space 511. That is, all projections of gravity centers are always located within the area of the first assembling space 511 regardless a position of a gravity center of the UAV frame that is just assembled or a position of a gravity center of the entire UAV that has already been assembled. In fact, the offset changes between all positions of gravity centers are always within a preset range to ensure stable flight.

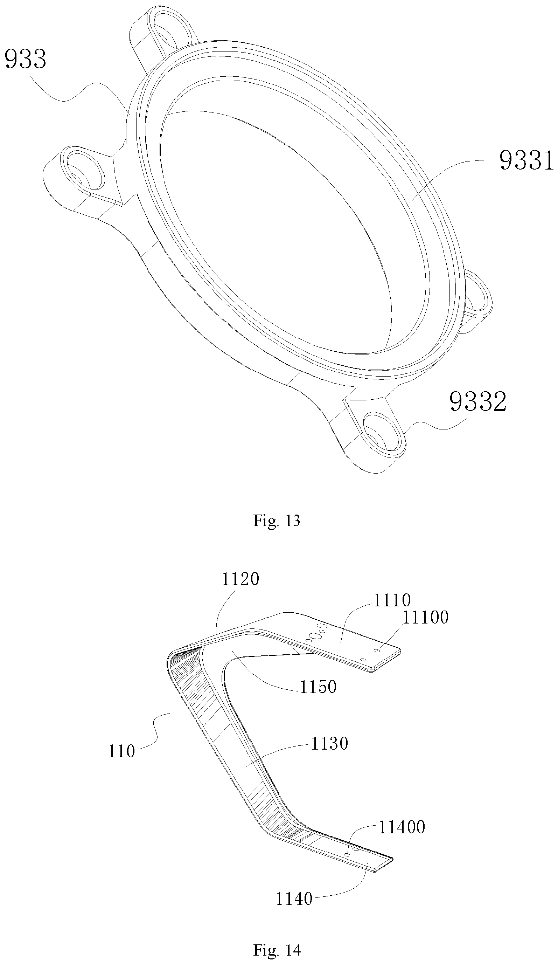

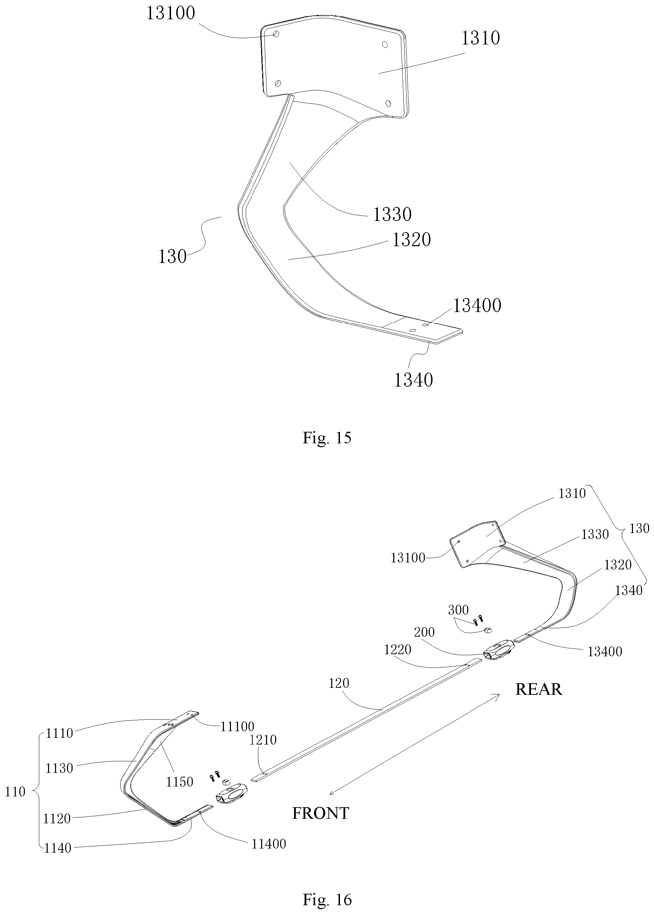

As illustrated in Fig. 14 and Fig. 15, a provided foot support 80 includes a front leg 110 and a rear leg 130. The front leg 110 includes a front support portion 1130 and a first detour portion 1120 which are connected to each other, and a first turn transition is formed at a connection between the front support portion 1130 and the first detour portion 1120. An end of the front support portion 1130 away from the first detour portion 1120 is used for supporting on a support plane, an end of the first detour portion 1120 away from the front support portion 1130 is used for connecting the body bearing plate 10, and an opening of the first turn transition is toward the rear leg 130.

The foot support 80 is used to assist the UAV to achieve normal take-off and landing operations. Especially during landing, the foot support 80 is instantaneously subjected to a counter-impact from the support plane when the UAV lands on the support plane, and if the transmission of the impact force cannot be effectively reduced, the precision parts of the UAV will be damaged. The front leg 110 of the foot support 80 has good elastic ability to withstand the impact and can convert the counter-impact force from the support plane into an elastic potential energy of the front leg 110 with the first turn transition formed between the front support portion 1130 and the first detour portion 1120. In this way, the counter-impact force to the UAV during landing is effectively reduced, and the strength requirement for the foot support 80 during the operation of the UAV may also be satisfied.

During the actual assembly of the UAV, the two front legs and two rear legs of the foot support 80 can be the same in structural form. For example, only the above front legs 110 are selected for forming the foot support 80, or the above front legs 110 may be mounted to a front end of the UAV while the rear legs 130 are configured as another legs that meet the take-off and landing requirements in the related art, or the rear legs 130 of the UAV are configured as the leg form of the above front legs 110 while the front legs 110 are configured as another legs that meet the take-off and landing requirements in the related art.

In the following description of the present disclosure, the front leg 110 and the rear leg 130 are different in structural form to form a foot support 80, in such a way, the structural design of the foot support 80 of the technical scheme is illustrated.

As illustrated in Fig. 15, the rear leg 130 includes a rear support portion 1330 and a second detour portion 1320 which are connected to each other, and a second turn transition is formed at a connection between the rear support portion 1330 and the second detour portion 1320. An end of the rear support portion 1330 away from the second detour portion 1320 is used for supporting on a support plane, an end of the second detour portion 1320 away from the rear support portion 1330 is used for connecting the body bearing plate 10, and an opening of the second turn transition is toward the front leg 110. Furthermore, taking the support plane as the reference plane, a height of a turning point of the second turn transition relative to the support plane is less than a height distance of a turning point of the first turn transition relative to the support plane. Same as the front leg 110, the second turn transition formed between the rear support portion 1330 and the second detour portion 1320 of the rear leg 130 enables the rear leg 130 to have good elastic deformation ability, such that the rear leg 130 is good at elastic deformation and can withstand the impact force generated by the support plane and convert the impact force from the support plane into the elastic potential energy of the rear leg 130. Thus, the counter-impact force to the UAV during landing is effectively reduced, and the strength requirement for the foot support 80 during the operation of the UAV may be satisfied.

During landing the UAV, the counter-impact force to the foot support 80 generated by the support plane first acts on the end of the front leg 110 which supports on the support plane and the end of the rear leg 130 which supports on the support plane, while the instantaneous action of the counter-impact force causes violent deformation of the front support portion 1130 and the rear support portion 1330, and then the impact force is transmitted to the body bearing plate 10 and the mounting frame along the front leg 110 and the rear leg 130. On the premise that the front leg 110 and the rear leg 130 meet the support strength, the first detour portion 1120 and the front support portion 1130 of the front leg 110 are successively narrowed in a direction from the body bearing plate 10 to the support plane, and the second detour portion 1320 and the rear support portion 1330 of the rear leg 130 are successively narrowed in a direction from the mounting frame to the support plane. In such a way, the bending deformation ability becomes stronger as parts of the front support portion 1130 and the rear support portion 1330 get closer to the support plane, such that the damage caused by the impact force is resolved by its own elastic deformation under the instantaneous action of the impact force.

The front leg 110 in the technical scheme also includes a first connection portion 1110 and a front ground portion 1140, and the rear leg 130 also includes a second connection portion 1310 and a rear ground portion 1340. A first end of the first connection portion 1110 is connected to the first detour portion 1120, and a second end of the first connection portion 1110 extends horizontally. The first connection portion 1110 is connected to a bottom of the body bearing plate 10, as illustrated in Fig. 14. The front leg 110 is fastened to the bottom of the body bearing plate 10 through a first connection hole 11100 defined on the first connection portion 1110 and a screw, and the first connection portion 1110 is connected to a bottom surface of the body bearing plate 10 in a form of horizontal contact. A first end of the front ground portion 1140 is connected to the front support portion 1130 for supporting on the support plane, and a second end of the front ground portion 1140 extends horizontally towards the rear leg 130. A first end of the second connection portion 1310 is connected to the second detour portion 1320, and a second end of the second connection portion 1310 extends vertically. The second connection portion 1310 is connected to a side of the mounting frame, as illustrated in Fig. 15. The rear leg 130 is connected to a side wall of the rear end of the mounting frame 50 through a third connection hole 13100 defined on the second connection portion 1310 and a screw. That is, a contact surface between the second connection portion 1310 and the side wall of the mounting frame 50 is a surface extending vertically. A first end of the rear ground portion 1340 is connected to the rear support portion 1330 for supporting on the support plane, and a second end of the rear ground portion 1340 extends horizontally towards the front leg 110.

In order to further improve the support strength of the front leg 110 and the rear leg 130, the front leg 110 also includes a reinforcing portion 1150 arranged on the first detour portion 1120 as illustrated in Fig. 14. The reinforcing portion 1150 extends to the front support portion 1130 along the first turn transition and also extends to the first connection portion 1110, in such a way that the mechanical strength of the front leg 110 is effectively enhanced. As illustrated in Fig. 15, a section of the second detour portion 1320 perpendicular to its central axis is triangular in shape, and the second detour portion 1320 is provided with a lumen filled with a support filler. Therefore, material consumption for manufacturing the rear leg 130 is reduced, and the support filler can also provides support for the rear support portion 1330 during manufacturing process to prevent the rear support portion 1330 with the lumen from collapsing and deforming. Certainly, the rear support portion 1330 in a form of column may also be designed as a solid column, or the lumen in the rear support portion 1330 is not filled with any support filler and the rear support portion 1330 is directly hollow.

During actual operation of landing the UAV, since the mechanical strength of the first connection portion 1110, the first detour portion 1120, and a part of the front support portion 1130 adjacent to the first detour portion 1120 are all enhanced by using the reinforcing portion 1150, the action force is concentrated in a part of the front support portion 1130 that is not reinforced by the reinforcing portion 1150 when the counter-impact force from the support plane acts at the moment of landing on the support plane. Thus, if the instantaneous counter-impact force exceeds the elastic deformation that the front support portion 1130 of the front leg 110 can bear, the hidden part of the front support portion 1130 that has not been reinforced by the reinforcing portion 1150 will break, and the location of the break has been reasonably designed such that the location of the break is farthest from the body bearing plate 10, so as to cause the least damage to the UAV. As for the rear leg 130, the rear support portion 1330 with lower strength is also weakest in bearing capacity. When the instantaneous impact force exceeds its bearing capacity, a first break occurs at the rear support portion 1330 to counteract the impact force.

Since the strength distribution design of the front leg 110 in the technical scheme is reasonably optimized, and that is the first connection portion 1110, the first detour portion 1120, the front support portion 1130, the front ground portion 1140, and the reinforcing portion 1150 are successively narrowed, by means of the combination of the reinforcing portion 1150 and the optimized strength distribution design, it can be ensured that the position of each break caused by force occurs between the first detour portion 1120 and the front ground portion 1140 to be away from the body bearing plate 10. Similarly, the strength distribution design of the rear leg 130 is also optimized reasonably, and that is, the second connection portion 1310, the second detour portion 1320, the rear support portion 1330, and the rear ground portion 1340 are successively narrowed, such that the position of each break of the rear leg 130 caused by force occurs between the rear support portion 1330 and the rear ground portion 1340 and is away from the body bearing plate 10 and the mounting frame, which minimizes the damage to the body bearing plate 10 and the mounting frame.

Since the legs of the foot support 80 are inclined along an outside direction of the UAV after mounted and fixed, in order to meet the mechanical strength design and the aesthetic design of the front legs 110, the reinforcing portion 1150 is arranged on an outside of the first connection portion 1110, the front support portion 1130 and a part of the first detour portion 1120 to form an cover edge as illustrated in Fig. 14. Thus, while enhancing the mechanical strength, the design of side cover edge allows the appearance of the front leg 110 to be full and thick and improves the external texture of the foot support 80.

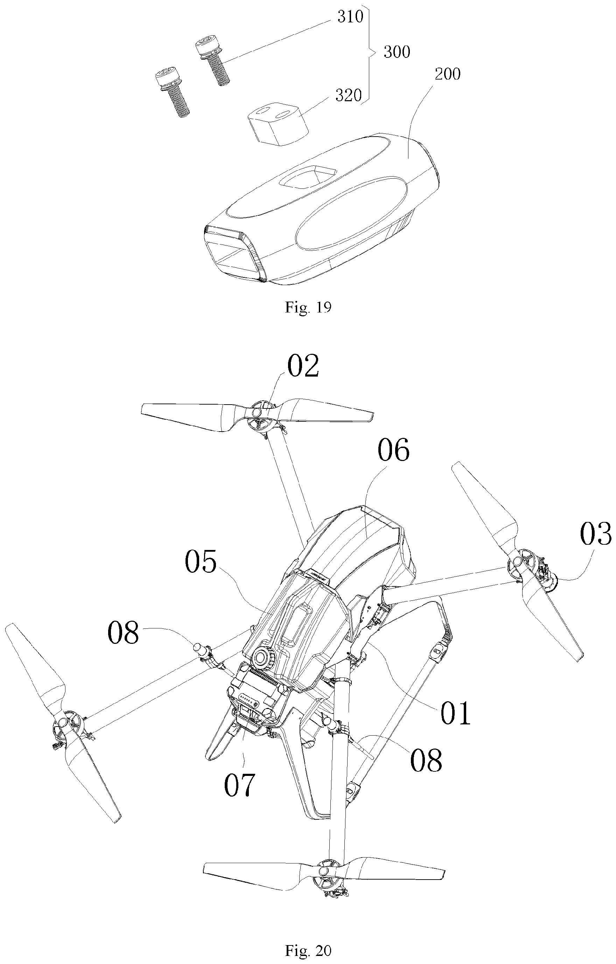

As illustrated in Fig. 16 and Fig. 19, the foot support 80 also includes a buffer damping piece 200 which is connected to the front ground portion 1140 of the front leg 110 through a fastener assembly 300, and the rear ground portion 1340 is connected to a buffer damping piece 200 through a fastener assembly 300. Thus, during landing the UAV, the buffer damping piece 200 may further reduce the impact force and the impact force transmitted to the body bearing plate 10. The buffer damping piece 200 is provided with a through inserting hole thereon to insert the ground portion and a receiving hole to receive a connection bolt 310. When the buffer damping piece 200 is connected to a ground portion of a corresponding leg, for instance, when the buffer damping piece 200 is connected to the front ground portion 1140, the assembly worker inserts the front ground portion 1140 into the through inserting hole, makes a second connection hole 11400 defined at the front ground portion 1140 opposite the receiving hole, places a lock nut 320 under the front ground portion 1140, then connects the connection bolt 310 to the lock nut 320 after the connection bolt passes through the receiving hole and the second connection hole 11400, and presses and locks the front ground portion 1140 against the hole wall of the through inserting hole using the lock nut 320 to connect and fix the front ground portion 1140. Similarly, the connection bolts 310 is connected to the lock nut 320 after passing through the receiving hole and a fourth connection hole 13400, and the rear ground portion 1340 is pressed and locked against the hole wall of the through inserting hole using the connection bolt 320 to be fixed.

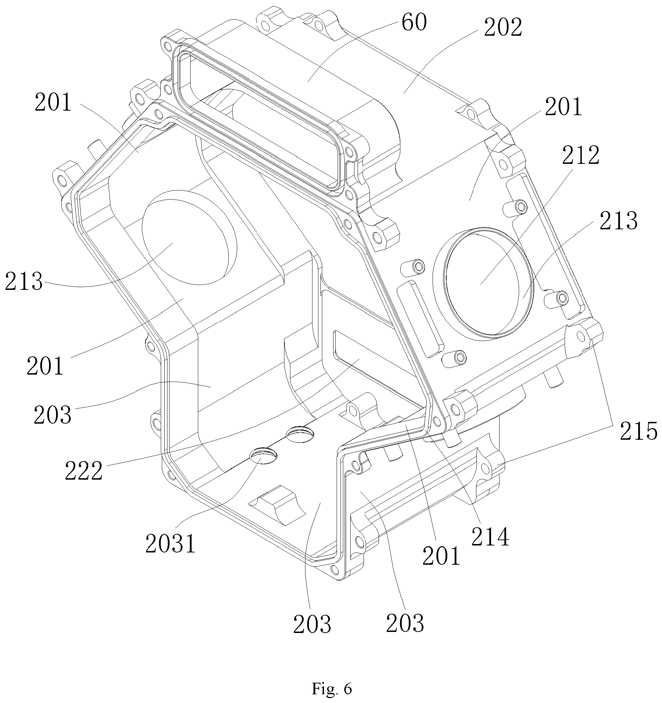

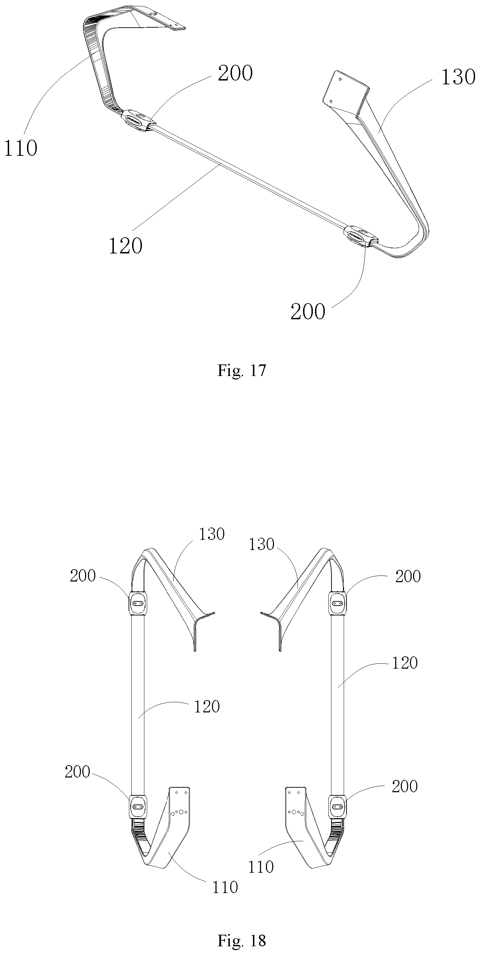

During landing the UAV, at the moment the foot support 80 is impacted, all the four legs of the foot support 80 will deform outwards. When the outward deformation is too large, the connection position of the first connection portion 1110 of the front leg 110 and the connection position of the second connection portion 1210 of the rear leg 130 are subjected to concentrated stress, causing the first connection portion 1110 and the second connection portion 1310 to break easily. In order to avoid break to the first connection portion 1110 and the second connection portion 1310 when the foot support 80 is impacted, the foot support 80 also includes a connection leg 120. A first end of the connection leg 120 is connected to the buffer damping piece 200 on the front ground portion 1140, and a second end of the connection leg 120 is connected to the buffer damping piece 200 on the rear ground portion 1340. As illustrated in Fig. 6, a front end of the connection leg 120 is provided with a front end connection hole 1210, and a rear end of the connection leg 120 is provided with a rear end connection hole 1220. During operation of connecting the buffer damping piece 200 of the front leg 110 to the connection leg 120, the front end of the connection leg 120 is inserted into the through inserting hole of the buffer damping piece 200 and is overlapped with the front ground portion 1140, the second connection hole 11400 is directly opposite to the front end connection hole 1210, the lock nut 320 is located between the front end of the connection leg 120 and the hole wall of the through inserting hole, the connection bolt 310 is then connected to the lock nut 320, and the lock nut 320 presses the front ground portion 1140 and the front end of the connection leg 120 against the hole wall of the through inserting hole. Similarly, during operation of connecting the rear end of the connection leg 120 to the buffer damping piece 200 of the rear leg 130, the rear end of the connection leg 120 is inserted into the through inserting hole of the buffer damping piece 200 and is overlapped with the rear ground portion 1340, the fourth connection hole 13400 is directly opposite the rear end connection hole 1220, the lock nut 320 is located between the rear end of the connection leg 120 and the hole wall of the through inserting hole, the connection bolt 310 is then connected to the lock nut 320, and the lock nut 320 presses the rear ground portion 1340 and the rear end of the connection leg 120 against the hole wall of the through inserting hole. The assembled foot support 80 is illustrated in Fig. 17 and Fig. 18. During landing, the front leg 110 and the rear leg 130 are pulled by the connection leg 120 to eliminate outwards expanding trend of the front leg 110 and the rear leg 130 and ensure that no break occurs at the first connection portion 1110 of the front leg 110 and the second connection portion 1310 of the rear leg 130.

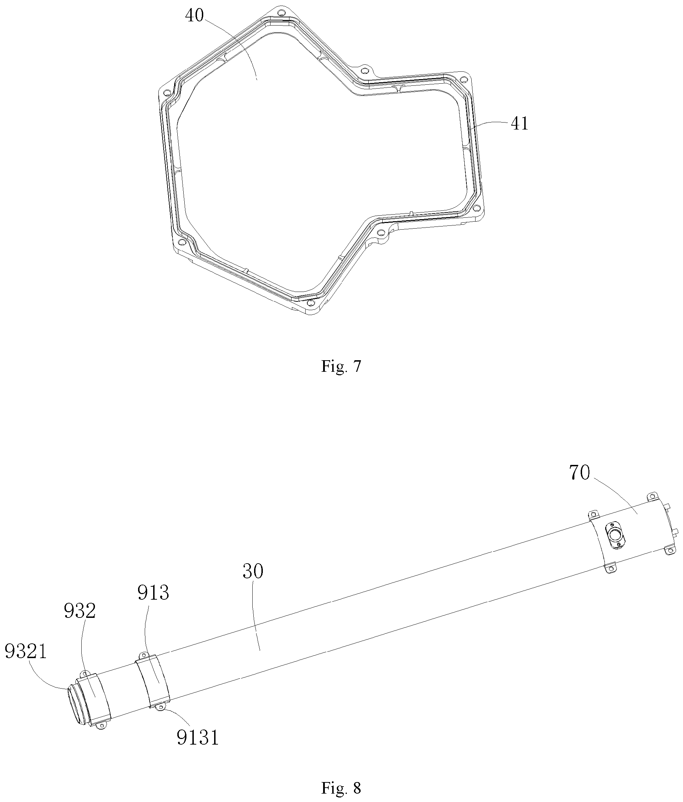

As illustrated in Fig. 8 and Fig. 9, during connecting the arm 30 to the body bearing plate 10 and the transfer chamber body 20 to form a basic configuration of the UAV frame, a connecting end of each arm 30 is connected to the body bearing plate 10 through a fixed connection assembly 91, and the fixed connection assembly 91 is located between the first bearing plate 11 and the second bearing plate 12. In the actual assembly and connection, the arm 30 is fixed to the body bearing plate 10 at the connecting end of each arm 30 by two spaced fixed connection assemblies 91. The fixed connection assembly 91 includes a fixed connection base 911, a fixed connection press ring 912, and a connection sleeve ring 913. The fixed connection base 911 is fixedly connected to the second bearing plate 12, and the fixed connection press ring 912 is connected to the fixed connection base 911 to define a clamping space therebetween, and the arm 30 is mounted in the clamping space. The first bearing plate 11 is fixedly connected to the fixed connection press ring 912, and the connection sleeve ring 913 is fitted over the arm 30. The connection sleeve ring 913 is provided with a connection lug 9131, and more specifically, two connection lugs 9131 are symmetrically provided on the connection sleeve ring 913 at 180 degrees. An inner side of the fixed connection base 911 is provided with a limiting groove 9111, the connecting lug 9131 extends into the limiting groove 9111, and the connecting sleeve ring 913 is clamped in the clamping space. The arm 30 is connected to the fixed connection base 911 and the fixed connection press ring 912 through the connection sleeve ring 913, which enables the arm 30 to have a certain damping and buffering capacity relative to the body bearing plate 10, thus achieving the flexible assembly connection between the arm 30 and the body bearing plate 10 to some extent.

In other feasible embodiments, the transfer chamber body 20 may be cylindrical in structure surrounded by a side wall with a circular cross-section.

Furthermore, the two first side walls 201 away from the second side wall 202 are curved walls concave towards the inner side of the connection cavity 211, such as a circular arc side wall or a turning curved side wall. Preferably, the two first side walls 201 (the turning curved side wall) are formed by two small straight walls connected by turning and concave towards the inside of the connection cavity 211, and the mounting through holes 212 is arranged on one of the two small straight walls away from the third side wall 203. Thus, the arm 30 corresponding to the mounting through holes 212 on the two small straight walls is drawn to the symmetrical central axis of the UAV frame, and that is, an included angle between the arms 30 connected to the two small straight walls is smaller than an included angle between the arms 30 connected to the two first side walls 201 which are adjacent to the second side wall 202, so as to integrally move the gravity center of the UAV frame or the UAV along an extending direction of the mounting frame 50. Thus, the mounting frame 50 has bigger assembling space to allow the UAV to carry more items (or more liquid medicine) during flight.

Each connection between the two adjacent side walls is provided with a first screw connection lug 215. The transfer chamber body 20 is fixedly connected to the second bearing plate 12 by fitting screws with the corresponding first screw connection lug 215, and the first bearing plate 11 is fittedly connected to the corresponding first screw connection lug 215 after passing through the first bearing plate 11 for fixed connection.

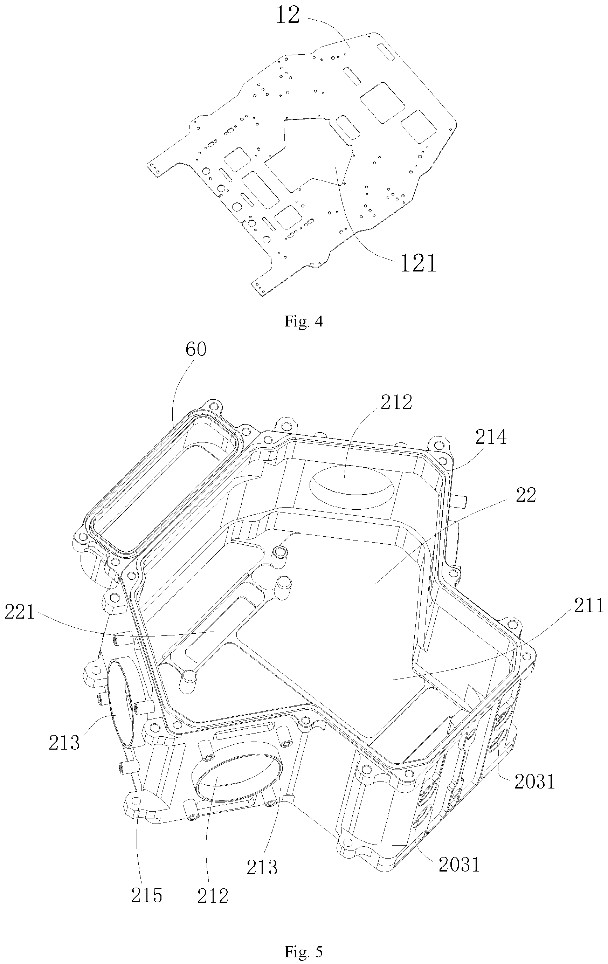

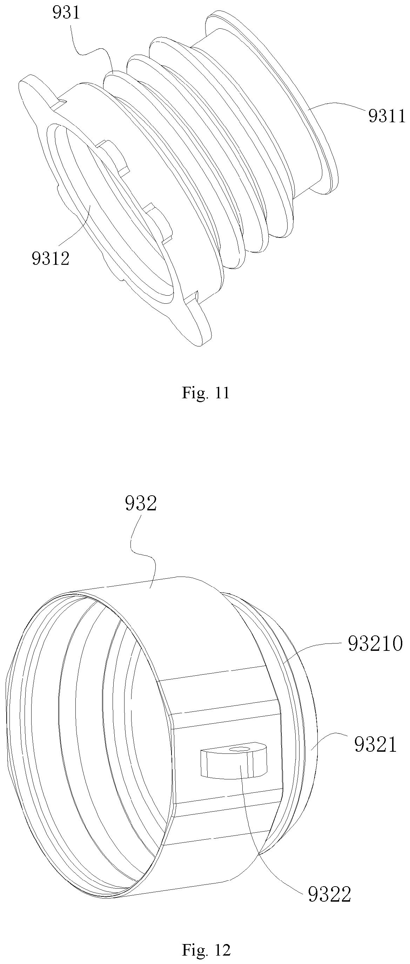

In order to further achieve a stable sealing performance between the arm 30 and the first side wall 201, the first end of the arm 30 is sealedly connected to the first side wall 201 by a sealing connection assembly 93. As illustrated in Fig. 1, and Fig. 11 to Fig. 13, the sealing connection assembly 93 includes a sealing hose 931, a sealing sleeve ring 932, and a sealing press ring 933. The sealing hose 931 may be a bellows. A first end of the sealing hose 931 is sealedly connected to the connecting end of the arm 30, and a second end of the sealing hose 931 is sealedly connected to the first side wall 201. The sealing sleeve ring 932 is sealedly fitted over the first end of the arm 30, and a sealing connection portion 9321 extends from an end of the sealing sleeve ring 932. The sealing connection portion 9321 is away from the arm 30 and is sealedly connected to the first end of the sealing hose 931. Specifically, a circumferential wall of the sealing connection portion 9321 is provided with a matching protrusion 93210, and an inner wall of the first end of the sealing hose 931 is provided with a sealing ring groove 9312. When the sealing connection portion 9321 is inserted into the first end of the sealing hose 931, the matching protrusion 93210 is fitted with the sealing ring groove 9312 to form a sealing structure. An inner side of the sealing press ring 933 is provided with a connection groove 9331, and an outer side of the second end of the sealing hose 931 is provided with a connection protrusion 9311 abutting against the connection groove 9331. The sealing press ring 933 is connected to the first side wall 201 to press the second end of the sealing hose 931 onto the first side wall 201. Specifically, the sealing press ring 933 is provided with a plurality of third screw connection lugs 9332 in a circumferential direction, and each of the third screw connection lugs 9332 is fixedly connected to the first side wall 201 by a screw. Referring to Fig. 5 and Fig. 6, the first side wall 201 is provided with a side wall protrusion 213 thereon, and the side wall protrusion 213 surrounds the mounting through hole 212. The side wall protrusion 213 extends into the second end of the sealing hose 931, and an outer wall surface of the side wall protrusion 213 is in contact with an inner wall surface of the sealing hose 931, such that the sealing performance between the sealing hose 931 and the first side wall 201 is more reliable and stable.

A side wall of the sealing sleeve ring 932 is provided with a second screw connection lug 9322 and is fittedly connected to the fixed connection base 911 and the fixed connection press ring 912 through the second screw connection lug 9322, such that the arm 30 is fixedly connected to the body bearing plate 10 not only by the two spaced fixed connection assemblies 91, but also by the sealing sleeve ring 932, the fixed connection base 911 and the fixed connection press ring 912.

According to another aspect of the technical scheme, as illustrated in Fig. 14 and Fig. 15, a UAV is provided, especially a UAV for plant protection operation. The UAV in the present embodiment includes a first element, a second element, and a UAV frame 01. The UAV frame 01 includes a body bearing plate 10, a transfer chamber body 20, and a transfer chamber cover 40. The transfer chamber body 20 is mounted to the body bearing plate 10 and defines a connection cavity 211 with an open end. The transfer chamber body 20 is provided with a through hole in communication with the connection cavity 211, and the transfer chamber cover 40 covers the transfer chamber body 20 to seal the connection cavity. The first element is provided with a connection line thereon and the second element is provided with a connection line thereon. The first element and the second element are mounted to the body bearing plate 10 and located outside the transfer chamber body 20. The connection lines of the first element and the second element pass through the through hole, and a connection interface of the connection line of the first element and a connection interface of the connection line of the second element are received in the connection cavity 211 of the transfer chamber body 20.

After the UAV is assembled, the UAV frame provided according to the technical scheme acts as an frame platform for mounting and connecting all assembly parts, such that during the mounting and assembling of the UAV, all the connection interfaces of the connection lines of the electric wiring arrangement in the UAV are received in the connection cavity 211 of the transfer chamber body 20. Thus, the connection interfaces of the connection lines are designed in a way of invisible arrangement to exclude the affection caused by disordered connection interfaces of the connection lines after the UAV is assembled, and the overall appearance is much tidy and aesthetic. Moreover, the protection for the connection interfaces of the connection lines by the transfer chamber body 20 eliminates problems such as poor contact, damage to the connection interfaces of the connection lines caused by external environmental factors.

In the UAV of the present embodiment, the UAV frame 01 also includes a plurality of arms 30, and each of the arms 30 has a first end and a second end opposite each other, as well as a lumen through the first end and the second end. A first end of each arm 30 is fixedly connected to the body bearing plate 10, and the first end of each arm 30 corresponds to the corresponding through hole on the transfer chamber body 20 one to one. The second end of each arm 30 is configured for mounting the second element, the lumen and the through hole are used for passing through the connection line of the second element, and the connection line interface of the second element is located in the connection cavity.

Specifically, during assembling the UAV, each of connection lines of the first element and the second element which are arranged in the lumen of the arm 30 and the connection cavity 211 includes a first electric wire section, a second electric wire section and a third electric wire section. A second end of the first electric wire section is provided with a first connection terminal. The second electric wire section is located in the connection cavity 211, and an end portion of the second electric wire section is provided with a second connection terminal. A first end of the third electric wire section is electrically coupled with the first element and the second element, and a second end of the third electric wire section is provided with a third connection terminal. A first end of the first electric wire section is provided with a fourth connection terminal. The first electric wire section extends in the lumen of the arm 30, the first connection terminal and the second connection terminal are placed in the connection cavity 211 after plugging and coupling together, and the second connection terminal and the fourth connection terminal are placed in the connection cavity 211 after plugging and coupling together. Thus, connections between the connection lines of the UAV adopt a portable and fast plugging and coupling way, and the worker may also assemble and disassemble conveniently and easily when the UAV needs to be maintained. In fact, the connection electric wire may merely include the first electric wire section and the second electric wire section. A first end of the first electric wire section is electrically coupled with the first element and the second element, the second end of the first electric wire section is provided with a first connection terminal. The second electric wire section is located in the connection cavity 211, and an end portion of the second electric wire section is provided with a second connection terminal. The first connection terminal and the second connection terminal are placed in the connection cavity 211 after plugging and coupling together, and the first electric wire section extends in the lumen.

After the fight controller and other assembly parts required to be assembled and connected to the body bearing plate 10 are completely mounted, the body bearing plate 10 and the assembly parts thereon are protected by covering a housing 06.

Referring to Fig. 8, Fig. 14 and Fig. 15, a power device 02 is mounted to an end of the arm 30 away from the body bearing plate 10. During assembly, firstly, a power mounting sleeve 70 is fixedly fitted over the end of the arm 30, an opening of the end of the arm 30 is sealed using the power mounting sleeve 70, and an insertion opening for passing through a connection electric wire of the power device 02 is defined on the power mounting sleeve 70. Then, the power device 02 is locked to the power mounting sleeve 70 by bolts and nuts.

Compared to the arrangement and mounting of the electric wire, the UAV in present embodiment also includes a spray device 03, a pumping device 04, and a liquid storage container 05. The spray device 03 is fixedly mounted to the arm 30, the pumping device 04 is fixedly connected to a bottom surface of the body bearing plate 10 of the UAV frame, and the liquid storage container 05 is detachably mounted to the UAV frame. The pumping device 04 is electrically coupled with a flight controller module, the spray device 03 is connected to the pumping device 04 through a first delivery pipe arranged in the lumen and the connection cavity, and the pumping device 04 is connected to the liquid storage container 05 through a second delivery pipe. Specifically, a flow meter is provided at a random position in the connection cavity 211 or on the second bearing plate 12, and the flow meter is electrically coupled with the flight controller module and is arranged in the second delivery pipe connecting the pumping device 04 to the liquid storage container 05, such that the capacity of a liquid for spraying which is delivered from the pumping device 04 to the spray device 03 can be known in real time.

Specifically, the first delivery pipe includes a first pipe section, a second pipe section, and a joint. The third side wall 203 of the UAV frame is provided with an insertion through hole 2031, and the joint is sealedly arranged in the insertion through hole 2031. Two ends of the first pipe section are respectively connected to the pumping device and a first end of the joint, and two ends of the second pipe section are respectively connected to a second end of the joint and the spray device.

In the UAV of the present embodiment, the induction antenna 08, which may be a communication induction antenna, an airline induction antenna, and the like, is fixedly mounted to the arm 30. The arm 30 is provided with a line via hole 31, and the induction antenna 08 and the connection line which is electrically coupled with the connection circuit board sealedly pass through the line via hole 31.

## Claims

1. An unmanned aerial vehicle (UAV) frame, comprising:
a body bearing plate (10) configured to mount a first element and a second element;
a transfer chamber body (20) mounted to the body bearing plate (10), defining a connection cavity (211) with an open end, and provided with a through hole (212, 221, 222) in communication with the connection cavity (211), wherein the first element and the second element are located outside the transfer chamber body (20), the through hole (212, 221, 222) is configured to pass through a connection line of the first element and a connection line of the second element, and the connection cavity (211) is configured to receive a connection interface of the connection line of the first element and a connection interface of the connection line of the second element; and
a transfer chamber cover (40) sealedly covering the open end of the transfer chamber body (20);
**characterized in that**:
the body bearing plate (10) comprises a first bearing plate (11) and a second bearing plate (12) arranged opposite each other, the transfer chamber body (20) is located between the first bearing plate (11) and the second bearing plate (12), the first bearing plate (11) is provided with a first matching hole (111), and the open end of the connection cavity (211) is opposite the first matching hole (111).

2. The UAV frame according to claim 1, wherein the body bearing plate (10) is provided with an arm (30) in an extending way, the arm (30) has a first end and a second end opposite each other, as well as a lumen through the first end and second end, the transfer chamber body (20) comprises a first side wall (201) surrounding the connection cavity of the transfer chamber body (20), the through hole of the transfer chamber body (20) comprises a mounting through hole (212) defined on the first side wall (201), the first end of the arm (30) is sealedly connected to the first side wall (201) of the transfer chamber body (20), the mounting through hole (212) is in communication with the lumen of the arm (30) and the connection cavity (211) of the transfer chamber body (20), the second end of the arm (30) is configured to mount the second element, and the lumen and the mounting through hole (212) are configured to pass through the connection line of the second element.

3. The UAV frame according to claim 2, wherein the number of the arm (30) is four, or six, or eight, accordingly, the number of the first side wall is four, or six, or eight.

4. The UAV frame according to claim 3, wherein the first element comprises an electronic speed controller located outside the transfer chamber body (20), the transfer chamber body (20) further comprises a bottom wall (22), the first side wall (201) extends vertically from the bottom wall (22), the through hole of the transfer chamber body (20) further comprises a first via hole (221) on the bottom wall (22), the first via hole (221) is configured to pass through a connection line of the electronic speed controller, the second element comprises an electric motor mounted to the second end of the arm (30), a connection line of the electric motor passes through the mounting through hole (212) and the lumen of the arm (30), and the connection line of the electronic speed controller and a connection interface of the connection line of the electric motor are both located in the connection cavity of the transfer chamber body (20).

5. The UAV frame according to claim 4, wherein the transfer chamber body (20) further comprises a second side wall (202) connected to the first side wall (201), four or six or eight first side walls (201) are evenly distributed at both sides of the second side wall (202), the through hole of the transfer chamber body (20) further comprises a communicating hole on the second side wall (202), the communicating hole is configured to pass through a connection line of a fight controller, and connection interfaces between the connection line of flight controller and the connection line of the electronic speed controller are located in the connection cavity of the transfer chamber body (20).

6. The UAV frame according to claim 5, wherein the first element comprises a liquid storage container located outside the transfer chamber body (20), the transfer chamber body (20) further comprises a third side wall (203) connected to the first side wall (201), the third side wall (203) is opposite the second side wall (202), the four or six or eight first side walls are evenly arranged on both sides of the third side wall (203), the through hole of the transfer chamber body (20) further comprises an insertion through hole on the third through hole, the insertion through hole is configured to pass through a connection line of the liquid storage container, the second element further comprises a nozzle mounted to the second end of the arm (3), a connection line of the nozzle passes through the lumen of the arm (30) and the mounting through hole (212), and connection interfaces of the connection line of the liquid storage container and the connection line of the nozzle are both located in the connection cavity of the transfer chamber body (20).

7. The UAV frame according to claim 3, wherein the first end of the arm (30) is sealedly connected to the first side wall (201) of the transfer chamber body (20) by a sealing connection assembly (93), the sealing connection assembly (93) comprises a sealing hose (931), and the sealing hose (931) has a first end fixedly connected to the first end of the arm (30) and a second end fixed connected to the transfer chamber body (20).

8. The UAV frame according to claim 7, wherein the sealing connection assembly (93) further comprises a sealing sleeve ring (932) sealedly fitted over a connection end of the arm (30), a sealing connection portion (9321) extends from an end of the sealing sleeve ring (932) away from the arm (30), the sealing connection portion (9321) extends into the first end of the sealing hose (931), a circumferential wall of the sealing connection portion (9321) is provided with a matching protrusion (93210), and an inner wall of the first end of the sealing hose (931) is provided with a sealing ring groove (9312) snapped with the matching protrusion (93210).

9. The UAV frame according to claim 7, wherein the sealing connection assembly further comprises a sealing press ring (933) fitted over the sealing hose (931), an outer side of the second end of the sealing hose (931) is provided with a connection protrusion (9311), and the sealing press ring (933) is fixedly connected to the first side wall (201) to sealedly press the connection protrusion (9311) of the second end of the sealing hose (931) onto the first side wall (201).

10. The UAV frame according to claim 9, wherein an inner side of the sealing press ring (933) is provided with a connection groove (9331), and the connection protrusion (9311) abuts against the connection groove (9311).

11. The UAV frame according to claim 9, wherein the first side wall (201) is provided with a side wall protrusion (213), the side wall protrusion (231) surrounds the mounting through hole (212), the side wall protrusion (213) extends into the second end of the sealing hose (931), and an outer wall surface of the side wall protrusion (213) is in contact with an inner wall surface of the sealing hose (931).

12. The UAV frame according to claim 6, further comprising a mounting frame having an end fixed connected to a third side wall (203) of the transfer chamber body (20), and configured to mount the liquid storage container, and a foot support (80), wherein the foot support (80) comprises a front leg (110) connected to a front end of the body bearing plate (10) and a rear leg (130) connected to a rear end of the mounting frame, the front leg (110) comprises a front support portion (1130) and a first detour portion (1120), the front support portion (1130) and the first detour portion (1120) are connected to each other, a first turn transition is formed at a connection between the front support portion (1130) and the first detour portion (1120), an end of the front support portion (1130) away from the first detour portion (1120) is configured to support on a support plane, an end of the first detour portion (1120) away from the front support portion (1130) is configured to connect the body bearing plate (10), and an opening of the first turn transition is toward the rear leg (130),
wherein the rear leg (130) comprises a rear support portion (1330) and a second detour portion (1320), the rear support portion (1330) and the second detour portion (1320) are connected to each other, a second turn transition is formed at a connection between the rear support portion (1330) and the second detour portion (1320), an end of the rear support portion (1330) away from the second detour portion (1320) is configured to support on a support plane, an end of the second detour portion (1320) away from the rear support portion (1330) is configured to connect the mounting frame, and an opening of the second turn transition is toward the front leg (110),
wherein the first detour portion (1120) and the front support portion (1130) are successively narrowed in a direction from the body bearing plate (10) to the support plane, and the second detour portion (1320) and the rear support portion (1330) are successively narrowed in a direction from the mounting frame to the support plane, and
wherein the front leg (110) further comprises a reinforcing portion (1150) arranged on the first detour portion (1120), and the reinforcing portion (1150) extends to the front support portion (1130) along the first turn transition.

13. The UAV frame according to any one of claims 1 to 12, wherein the transfer chamber cover (40) is detachably connected to the transfer chamber body (20).

14. A UAV comprising: a first element, a second element and a frame, the frame being the UAV frame according to any one of claims 1 to 13, and the first element and the second element being mounted to the body bearing plate (100) of the UAV frame.

## Patentansprüche

1. Ein UAV-Rahmen ("unmanned aerial vehicle (UAV) frame"), umfassend:
eine Körperlagerplatte (10) die zur Montage eines ersten Elements und eines zweiten Elements ausgebildet ist;
einen Transferkammerkörper (20), der an der Körperlagerplatte (10) montiert ist, einen Verbindungshohlraum (211) mit einem offenen Ende definiert und mit einem Durchgangsloch (212, 221, 222) versehen ist, das in Verbindung mit dem Verbindungshohlraum (211) steht, wobei das erste Element und das zweite Element außerhalb des Transferkammerkörpers (20) angeordnet sind, das Durchgangsloch (212, 221, 222) zum Durchführen einer Verbindungsleitung des ersten Elements und einer Verbindungsleitung des zweiten Elements ausgebildet ist und der Verbindungshohlraum (211) zum Aufnehmen einer Verbindungsschnittstelle der Verbindungsleitung des ersten Elements und einer Verbindungsschnittstelle der Verbindungsleitung des zweiten Elements ausgebildet ist; und
eine Transferkammerabdeckung (40), die das offene Ende des Transferkammerkörpers (20) dichtend abdeckt;
**dadurch gekennzeichnet, dass**:
die Körperlagerplatte (10) eine erste Lagerplatte (11) und eine zweite Lagerplatte (12) umfasst, die einander gegenüberliegend angeordnet sind, der Transferkammerkörper (20) zwischen der ersten Lagerplatte (11) und der zweiten Lagerplatte (12) angeordnet ist, die erste Lagerplatte (11) mit einem ersten Passloch (111) versehen ist und das offene Ende des Verbindungshohlraums (211) dem ersten Passloch (111) gegenüberliegt.

2. UAV-Rahmen gemäß Anspruch 1, wobei die Körperlagerplatte (10) mit einem Arm (30) in einer sich erstreckenden Weise versehen ist, wobei der Arm (30) ein erstes Ende und ein zweites Ende, die einander gegenüberliegen, sowie ein Lumen durch das erste Ende und das zweite Ende hat, der Transkammerkörper (20) eine erste Seitenwand (201) umfasst, die den Verbindungshohlraum des Transferkammerkörpers (20) umgibt, das Durchgangsloch des Transferkammerkörpers (20) ein Montagedurchgangsloch (212) umfasst, das an der ersten Seitenwand (201) definiert ist, das erste Ende des Arms (30) mit der ersten Seitenwand (201) des Transferkammerkörpers (20) abdichtend verbunden ist, das Montagedurchgangsloch (212) mit dem Lumen des Arms (30) und dem Verbindungshohlraum (211) des Transferkammerkörpers (20) in Verbindung steht, das zweite Ende des Arms (30) zum Montieren des zweiten Elements ausgebildet ist und das Lumen und das Montagedurchgangsloch (212) dazu ausgebildet sind, die Verbindungsleitung des zweiten Elements durchzuführen.

3. UAV-Rahmen gemäß Anspruch 2, wobei die Anzahl des Arms (30) vier oder sechs oder acht ist, und die Anzahl der ersten Seitenwand dementsprechend vier oder sechs oder acht ist.

4. UAV-Rahmen gemäß Anspruch 3, wobei das erste Element einen elektronischen Geschwindigkeitscontroller umfasst, der außerhalb des Transferkammerkörpers (20) angeordnet ist, der Transferkammerkörper (20) ferner eine Bodenwand (22) umfasst, die erste Seitenwand (201) sich vertikal von der Bodenwand (22) aus erstreckt, das Durchgangsloch des Transferkammerkörpers (20) ferner ein erstes Gegenloch (221) an der Bodenwand (22) umfasst, das erste Gegenloch (221) dazu ausgebildet ist, eine Verbindungsleitung des elektronischen Geschwindigkeitscontrollers durchzuführen, das zweite Element einen Elektromotor umfasst, der an dem zweiten Ende des Arms (30) montiert ist, eine Verbindungsleitung des Elektromotors durch das Montagedurchgangsloch (212) und das Lumen des Arms (30) hindurchtritt, und die Verbindungsleitung des elektronischen Geschwindigkeitscontrollers und eine Verbindungsschnittstelle der Verbindungsleitung des Elektromotors beide in dem Verbindungshohlraum des Transferkammerkörpers (20) angeordnet sind.

5. UAV-Rahmen gemäß Anspruch 4, wobei der Transferkammerkörper (20) ferner eine zweite Seitenwand (202) umfasst, die mit der ersten Seitenwand (201) verbunden ist, wobei vier oder sechs oder acht erste Seitenwände (201) gleichmäßig an beiden Seiten der zweiten Seitenwand (202) verteilt sind, das Durchgangsloch des Transferkammerkörpers (20) ferner ein Verbindungsloch an der zweiten Seitenwand (202) umfasst, das Verbindungsloch dazu ausgebildet ist, eine Verbindungsleitung eines Flugcontrollers durchzuführen, und Verbindungsschnittstellen zwischen der Verbindungsleitung des Flugcontrollers und der Verbindungsleitung des elektronischen Geschwindigkeitsreglers in dem Verbindungshohlraum des Transferkammerkörpers (20) angeordnet sind.

6. UAV-Rahmen gemäß Anspruch 5, wobei das erste Element einen Flüssigkeitsspeicherbehälter umfasst, der außerhalb des Transferkammerkörpers (20) angeordnet ist, der Transferkammerkörper (20) ferner eine dritte Seitenwand (203) umfasst, die mit der ersten Seitenwand (201) verbunden ist, die dritte Seitenwand (203) der zweiten Seitenwand (202) gegenüberliegt, die vier oder sechs oder acht ersten Seitenwände an beiden Seiten der dritten Seitenwand (203) gleichmäßig angeordnet sind, das Durchgangsloch des Transferkammerkörpers (20) ferner ein Einführungsdurchgangsloch an dem dritten Durchgangsloch umfasst, das Einführungsdurchgangsloch zum Durchführen einer Verbindungsleitung des Flüssigkeitsspeicherbehälters ausgelegt ist, das zweite Element ferner eine Düse umfasst, die an dem zweiten Ende des Arms (3) montiert ist, eine Verbindungsleitung der Düse durch das Lumen des Arms (30) und das Montagedurchgangsloch (212) hindurchtritt und Verbindungsschnittstellen der Verbindungsleitung des Flüssigkeitsspeicherbehälters und der Verbindungsleitung der Düse beide in dem Verbindungshohlraum des Transferkammerkörpers (20) angeordnet sind.

7. UAV-Rahmen gemäß Anspruch 3, wobei das erste Ende des Arms (30) mit der ersten Seitenwand (201) des Transferkammerkörpers (20) durch eine Dichtungsverbindungsanordnung (93) abdichtend verbunden ist, die Dichtungsverbindungsanordnung (93) einen Dichtschlauch (931) umfasst und der Dichtschlauch (931) ein erstes Ende, das fest mit dem ersten Ende des Arms (30) verbunden ist, und ein zweites Ende, das fest mit dem Transferkammerkörper (20) verbunden ist, hat.

8. UAV-Rahmen gemäß Anspruch 7, wobei die Dichtungsverbindungsanordnung (93) ferner eine Dichtungsverbindungsmuffe (932) umfasst, die über ein Verbindungsende des Arms (30) abdichtend angepasst ist, ein Dichtungsverbindungsabschnitt (9321) sich von einem Ende der Dichtungsverbindungsmuffe (932) aus weg von dem Arm (30) erstreckt, der Dichtungsverbindungsabschnitt (9321) sich in das erste Ende des Dichtschlauchs (931) erstreckt, eine Umfangswand des Dichtungsverbindungsabschnitts (9321) mit einem Passvorsprung (93210) versehen ist und eine innere Wand des ersten Endes des Dichtschlauchs (931) ist mit einer Dichtungsringnut (9312) versehen ist, die mit dem Passvorsprung (93210) verrasted ist.

9. UAV-Rahmen gemäß Anspruch 7, wobei die Dichtungsverbindungsanordnung ferner einen Dichtungspressring (933) umfasst, der über den Dichtschlauch (931) gepasst ist, eine Außenseite des zweiten Endes des Dichtschlauchs (931) mit einem Verbindungsvorsprung (9311) versehen ist und der Dichtungspressring (933) fest mit der ersten Seitendwand (201) verbunden ist, um den Verbindungsvorsprung (9311) des zweiten Endes des Dichtungsschlauchs (931) abdichtend gegen die erste Seitenwand (201) zu pressen.

10. UAV-Rahmen gemäß Anspruch 9, wobei eine innere Seite des Dichtungspressrings (933) mit einer Verbindungsnut (9331) versehen ist und der Verbindungsvorsprung (9311) an die Verbindungsnut (9311) stößt.

11. UAV-Rahmen gemäß Anspruch 9, wobei die erste Seitenwand (201) mit einem Seitenwandvorsprung (213) versehen ist, der Seitenwandvorsprung (231) das Montagedurchgangsloch (212) umgibt, der Seitenwandvorsprung (213) sich in das zweite Ende des Dichtungsschlauchs (931) erstreckt und eine äußere Wandoberfläche des Seitenwandvorsprungs (213) mit einer inneren Wandoberfläche des Dichtungsschlauchs (931) in Kontakt steht.

12. UAV-Rahmen gemäß Anspruch 6, ferner umfassend einen Montagerahmen mit einem Ende, das mit einer dritten Seitenwand (203) des Transferkammerkörpers (20) fest verbunden ist und zum Montieren des Flüssigkeitsspeicherbehälters ausgestaltet ist, und eine Fußstütze (80), wobei die Fußstütze (80) ein vorderes Bein (110), das mit einem vorderen Ende der Körperlagerplatte (10) verbunden ist, und ein hinteres Bein (130), das mit einem hinteren Ende des Montagerahmens verbunden ist, das vordere Bein (110) einen vorderen Stützabschnitt (1130) und einen ersten Umlenkabschnitt (1120) umfasst, der vordere Stützabschnitt (1130) und der erste Umlenkabschnitt (1120) miteinander verbunden sind, ein erster Kurvenübergang an einer Verbindung zwischen dem ersten Stützabschnitt (1130) und dem ersten Umlenkabschnitt (1120) ausgebildet ist, ein Ende des vorderen Stützabschnitts (1130) entfernt von dem ersten Umlenkabschnitt (1120) dazu ausgestaltet ist, sich auf einer Stützebene abzustützen, ein Ende des ersten Umlenkabschnitts (1120) entfernt von dem vorderen Stützabschnitt (1130) dazu ausgestaltet ist, die Körperlagerplatte (10) zu verbinden, und eine Öffnung des ersten Kurvenübergangs in Richtung des hinteren Beins (130) liegt,
wobei das hintere Bein (130) einen hinteren Stützabschnitt (1330) und einen zweiten Umlenkabschnitt (1320) umfasst, der hintere Stützabschnitt (1330) und der hintere Umlenkabschnitt (1320) miteinander verbunden sind, ein zweiter Kurvenübergang an einer Verbindung zwischen dem hinteren Stützabschnitt (1330) und dem zweiten Umlenkabschnitt (1320) ausgebildet ist, ein Ende des hinteren Stützabschnitts (1330) entfernt von dem zweiten Umlenkabschnitt (1320) dazu ausgelegt ist, sich auf einer Stützebene abzustützen, ein Ende des zweiten Umlenkabschnitts (1320) entfernt von dem hinteren Stützabschnitt (1330) dazu ausgelegt ist, den Montagerahmen zu verbinden, und eine Öffnung des zweiten Kurvenübergangs in Richtung des vorderen Beins (110) liegt,
wobei der erste Umlenkabschnitt (1120) und der vordere Stützabschnitt (1130) sich stufenweise in einer Richtung von der Körperlagerplatte (10) zu der Stützebene hin verjüngen und der zweite Umlenkabschnitt (1320) und der hintere Stützabschnitt (1330) sich in einer Richtung von dem Montagerahmen zu der Stützebene hin sukzessive verjüngen, und
wobei das vordere Bein (110) ferner einen Verstärkungsabschnitt (1150) umfasst, der auf dem ersten Umlenkabschnitt (1120) angeordnet ist, und der Verstärkungsabschnitt (1150) sich von dem vorderen Stützabschnitt (1130) aus entlang dem ersten Umlenkabschnitt erstreckt.

13. UAV-Rahmen gemäß einem der Ansprüche 1 bis 12, wobei die Transferkammerabdeckung (40) entfernbar mit dem Transferkammerkörper (20) verbunden ist.

14. UAV umfassend: ein erstes Element, ein zweites Element und einen Rahmen, wobei der Rahmen der UAV-Rahmen gemäß einem der Ansprüche 1 bis 13 und das erste Element und das zweite Element an der Körperlagerplatte (100) des UAV-Rahmens montiert sind.

## Revendications

1. Châssis de véhicule aérien sans pilote (UAV) comprenant :
une plaque de support de corps (10) configurée pour monter un premier élément et un second élément ;
un corps de chambre de transfert (20) monté sur la plaque de support de corps (10), définissant une cavité de connexion (211) avec une extrémité ouverte, et prévu avec un trou débouchant (212, 221, 222) en communication avec la cavité de connexion (211), dans lequel le premier élément et le second élément sont situés à l'extérieur du corps de chambre de transfert (20), le trou débouchant (212, 221, 222) est configuré pour passer à travers une ligne de connexion du premier élément et une ligne de connexion du second élément et la cavité de connexion (211) est configurée pour recevoir une interface de connexion de la ligne de connexion du premier élément et une interface de connexion de la ligne de connexion du second élément ; et
un couvercle de chambre de transfert (40) recouvrant, de manière étanche, l'extrémité ouverte du corps de chambre de transfert (20) ;
**caractérisé en ce que** :
la plaque de support de corps (10) comprend une première plaque de support (11) et une seconde plaque de support (12) agencées à l'opposé l'une de l'autre, le corps de chambre de transfert (20) est situé entre la première plaque de support (11) et la seconde plaque de support (12), la première plaque de support (11) est prévue avec un premier trou correspondant (111), et l'extrémité ouverte de la cavité de connexion (211) est opposée au premier trou correspondant (111).

2. Châssis de UAV selon la revendication 1, dans lequel la plaque de support de corps (10) est prévue avec un bras (30) d'une manière étendue, le bras (30) a une première extrémité et une seconde extrémité opposées entre elles, ainsi qu'une lumière à travers la première extrémité et la seconde extrémité, le corps de chambre de transfert (20) comprend une première paroi latérale (201) entourant la cavité de connexion du corps de chambre de transfert (20), le trou débouchant du corps de chambre de transfert (20) comprend un trou débouchant de montage (212) défini sur la première paroi latérale (201), la première extrémité du bras (30) est connectée, de manière étanche, à la première paroi latérale (201) du corps de chambre de transfert (20), le trou débouchant de montage (212) est en communication avec la lumière du bras (30) et la cavité de connexion (211) du corps de chambre de transfert (20), la seconde extrémité du bras (30) est configurée pour monter le second élément et la lumière et le trou débouchant de montage (212) sont configurés pour passer à travers la ligne de connexion du second élément.

3. Châssis de UAV selon la revendication 2, dans lequel le nombre de bras (30) est de quatre ou six ou huit, par conséquent le nombre de premières parois latérales est de quatre ou six ou huit.

4. Châssis de UAV selon la revendication 3, dans lequel le premier élément comprend un régulateur de vitesse électronique positionné à l'extérieur du corps de chambre de transfert (20), le corps de chambre de transfert (20) comprend en outre une paroi inférieure (22), la première paroi latérale (201) s'étend verticalement à partir de la paroi inférieure (22), le trou débouchant du corps de chambre de transfert (20) comprend en outre un premier trou d'interconnexion (221) sur la paroi inférieure (22), le premier trou d'interconnexion (221) est configuré pour passer à travers une ligne de connexion du régulateur de vitesse électronique, le second élément comprend un moteur électrique monté sur la seconde extrémité du bras (30), une ligne de connexion du moteur électrique passe par le trou débouchant de montage (212) et la lumière du bras (30), et la ligne de connexion du régulateur de vitesse électronique et une interface de connexion de la ligne de connexion du moteur électrique sont toutes deux situées dans la cavité de connexion du corps de chambre de transfert (20).

5. Châssis de UAV selon la revendication 4, dans lequel le corps de chambre de transfert (20) comprend en outre une deuxième paroi latérale (202) connectée à la première paroi latérale (201), quatre ou six ou huit premières parois latérales (201) sont régulièrement réparties des deux côtés de la deuxième paroi latérale (202), le trou débouchant du corps de chambre de transfert (20) comprend en outre un trou de communication sur la deuxième paroi latérale (202), le trou de communication est configuré pour passer à travers une ligne de connexion d'un organe de commande de vol, et les interfaces de connexion entre la ligne de connexion de l'organe de commande de vol et la ligne de connexion du régulateur de vitesse électronique sont positionnées dans la cavité de connexion du corps de chambre de transfert (20).

6. Châssis de UAV selon la revendication 5, dans lequel le premier élément comprend un récipient de stockage de liquide situé à l'extérieur du corps de chambre de transfert (20), le corps de chambre de transfert (20) comprend en outre une troisième paroi latérale (203) connectée à la première paroi latérale (201), la troisième paroi latérale (203) est opposée à la deuxième paroi latérale (202), les quatre ou six ou huit premières parois latérales sont régulièrement agencées des deux côtés de la troisième paroi latérale (203), le trou débouchant du corps de chambre de transfert (20) comprend en outre un trou débouchant d'insertion sur le troisième trou débouchant, le trou débouchant d'insertion est configuré pour passer à travers une ligne de connexion du récipient de stockage de liquide, le second élément comprend en outre une buse montée sur la seconde extrémité du bras (3), une ligne de connexion de la buse passe à travers la lumière du bras (30) et le trou débouchant de montage (212), et les interfaces de connexion de la ligne de connexion du récipient de stockage de liquide et la ligne de connexion de la buse sont toutes deux situées dans la cavité de connexion du corps de chambre de transfert (20).

7. Châssis de UAV selon la revendication 3, dans lequel la première extrémité du bras (30) est connectée, de manière étanche, à la première paroi latérale (201) du corps de chambre de transfert (20) par un ensemble de connexion d'étanchéité (93), l'ensemble de connexion d'étanchéité (93) comprend un tuyau flexible d'étanchéité (931), et le tuyau flexible d'étanchéité (931) a une première extrémité connectée de manière fixe à la première extrémité du bras (30) et une seconde extrémité connectée au corps de chambre de transfert (20).

8. Châssis de UAV selon la revendication 7, dans lequel l'ensemble de connexion d'étanchéité (93) comprend en outre une bague de manchon d'étanchéité (932) montée de manière étanche sur une extrémité de connexion du bras (30), une partie de connexion d'étanchéité (9321) s'étend à partir d'une extrémité de la bague de manchon d'étanchéité (932) à l'opposé du bras (30), la partie de connexion d'étanchéité (9321) s'étend dans la première extrémité du tuyau flexible d'étanchéité (931), une paroi circonférentielle de la partie de connexion d'étanchéité (9321) est prévue avec une saillie correspondante (93210) et une paroi interne de la première extrémité du tuyau flexible d'étanchéité (931) est prévue avec une gorge de bague d'étanchéité (9312) encliquetée avec la saillie correspondante (93210).

9. Châssis de UAV selon la revendication 7, dans lequel l'ensemble de connexion d'étanchéité comprend en outre une bague de pression d'étanchéité (933) montée sur le tuyau flexible d'étanchéité (931), un côté externe de la seconde extrémité du tuyau flexible d'étanchéité (931) est prévu avec une saillie de connexion (9311), et la bague de pression d'étanchéité (933) est connectée, de manière fixe, à la première paroi latérale (201) pour comprimer, de manière étanche, la saillie de connexion (9311) de la seconde extrémité du tuyau flexible d'étanchéité (931) sur la première paroi latérale (201).

10. Châssis de UAV selon la revendication 9, dans lequel un côté interne de la bague de pression d'étanchéité (933) est prévu avec une gorge de connexion (9331), et la saillie de connexion (9311) vient en butée contre la gorge de connexion (9311).

11. Châssis de UAV selon la revendication 9, dans lequel la première paroi latérale (201) est prévue avec une saillie de paroi latérale (213), la saillie de paroi latérale (231) entoure le trou débouchant de montage (212), la saillie de paroi latérale (213) s'étend dans la seconde extrémité du tuyau flexible d'étanchéité (931), et une surface de paroi externe de la saillie de paroi latérale (213) est en contact avec une surface de paroi interne du tuyau flexible d'étanchéité (931).

12. Châssis de UAV selon la revendication 6, comprenant en outre un châssis de montage ayant une extrémité fixe connectée à une troisième paroi latérale (203) du corps de chambre de transfert (20), et configuré pour monter le récipient de stockage de liquide et un support de pied (80), dans lequel le support de pied (80) comprend une patte avant (110) connectée à une extrémité avant de la plaque de support de corps (10) et une patte arrière (130) connectée à une extrémité arrière du châssis de montage, la patte avant (110) comprend une partie de support avant (1130) et une première partie de déviation (1120), la partie de support avant (1130) et la première partie de déviation (1120) sont connectées l'une à l'autre, une première transition de virage est formée au niveau d'une connexion entre la partie de support avant (1130) et la première partie de déviation (1120), une extrémité de la partie de support avant (1130) à l'opposé de la première partie de déviation (1120) est configurée pour s'appuyer sur un plan de support, une extrémité de la première partie de déviation (1120) à l'opposé de la partie de support avant (1130) est configurée pour connecter la plaque de support de corps (10), et une ouverture de la première transition de virage est vers la patte arrière (130),
dans lequel la patte arrière (130) comprend une partie de support arrière (1330) et une seconde partie de déviation (1320), la partie de support arrière (1330) et la seconde partie de déviation (1320) sont connectées l'une à l'autre, une seconde transition de virage est formée au niveau d'une connexion entre la partie de support arrière (1330) et la seconde partie de déviation (1320), une extrémité de la partie de support arrière (1330) à l'opposé de la seconde partie de déviation (1320) est configurée pour s'appuyer sur un plan de support, une extrémité de la seconde partie de déviation (1320) à l'opposé de la partie de support arrière (1330) est configurée pour connecter le châssis de montage, et une ouverture de la seconde transition de virage est vers la patte avant (110),
dans lequel la première partie de déviation (1120) et la partie de support avant (1130) sont successivement rétrécies dans une direction allant de la plaque de support de corps (10) au plan de support, et la seconde partie de déviation (1320) et la partie de support arrière (1330) sont successivement rétrécies dans une direction allant du châssis de montage au plan de support, et
dans lequel la patte avant (110) comprend en outre une partie de renforcement (1150) agencée sur la première partie de déviation (1120), et la partie de renforcement (1150) s'étend jusqu'à la partie de support avant (1130) le long de la première transition de virage.

13. Châssis de UAV selon l'une quelconque des revendications 1 à 12, dans lequel le couvercle de chambre de transfert (40) est connecté, de manière détachable, au corps de chambre de transfert (20).

14. UAV comprenant : un premier élément, un second élément et un châssis, le châssis étant le châssis de UAV selon l'une quelconque des revendications 1 à 13, et le premier élément et le second élément étant montés sur la plaque de support de corps (100) du châssis de UAV.
